# EUROPÄISCHE PATENTSCHRIFT

(11) **EP 3 921 201 B1**
(45) Veröffentlichungstag und Bekanntmachung des Hinweises auf die Patenterteilung: **19.07.2023**
(21) Anmeldenummer: 20704192.2
(22) Anmeldetag: 28.01.2020
(51) Int. Cl.: B60K 35/00, B60K 37/06, B60R 11/00, B60R 11/02

(54) **FAHRZEUG MIT VERSTELLBAREM BILDSCHIRM**
VEHICLE HAVING AN ADJUSTABLE DISPLAY SCREEN
VÉHICULE ÉQUIPÉ D'UN ÉCRAN RÉGLABLE

(30) Priorität: 06.02.2019 DE 102019102943
(43) Veröffentlichungstag der Anmeldung: 15.12.2021
(73) Patentinhaber: Bayerische Motoren Werke Aktiengesellschaft, 80809 München (DE)
(72) Erfinder: SCHMID, Bernhard, 85774 Unterföhring (DE)
(86) Internationale Anmeldenummer: PCT/EP2020/051991
(87) Internationale Veröffentlichungsnummer: WO 2020/160958

(56) Entgegenhaltungen:
- EP-A1- 1 783 531
- DE-A1-102012 222 900
- DE-A1-102015 214 761
- DE-A1-102016 007 348
- US-A1- 2014 333 647
- US-A1- 2015 165 906

## Beschreibung

Die Erfindung betrifft ein Fahrzeug mit einem Bildschirm, der für unterschiedliche Nutzungsszenarien unterschiedlich eingestellt werden kann.

Ein Fahrzeug, insbesondere ein Kraftfahrzeug, weist typischerweise zumindest einen Bildschirm auf, der z.B. in der Mittelkonsole und/oder an dem Armaturenbrett des Fahrzeugs angeordnet ist. Der Bildschirm kann Teil eines Infotainmentsystems des Fahrzeugs sein, und kann z.B. als Teil einer Benutzerschnittstelle und/oder als Navigationsgerät genutzt werden. Aufgrund des beschränkten Bauraums in einem Fahrzeug sowie aus Design- und Kostengründen ist der Bildschirm eines Fahrzeugs meist relativ klein, so dass der Bildschirm insbesondere für die Wiedergabe von Filmen nur begrenzt genutzt werden kann. DE 10 2015 214761 A1 beschreibt eine Vorrichtung zur Unterstützung eines Führers eines Fortbewegungsmittels. EP 1 783 531 A1 beschreibt eine Projektionsanzeige. DE 10 2016 007348 A1 beschreibt eine Anzeigevorrichtung. DE 10 2012 222900 A1 beschreibt eine Blickfeldanzeige für ein Fahrzeug. US 2015/165906 A1 und US 2014/333647 A1 beschreiben eine Anzeigevorrichtung für ein Fahrzeug.

Das vorliegende Dokument befasst sich mit der technischen Aufgabe, ein Fahrzeug mit einem kompakten Bildschirm bereitzustellen, der in effizienter und flexibler Weise für unterschiedliche Anwendungen genutzt werden kann.

Die Aufgabe wird durch den unabhängigen Anspruch gelöst. Vorteilhafte Ausführungsformen werden u.a. in den abhängigen Ansprüchen beschrieben. Gemäß einem Aspekt wird ein Fahrzeug, insbesondere ein (Straßen-) Kraftfahrzeug (etwa ein Personenkraftwagen oder ein Lastkraftwagen oder ein Bus oder ein Motorrad), beschrieben. Das Fahrzeug umfasst einen Bildschirm, der ausgebildet ist, zwischen einer Betrachtungslage und einer Spiegelungslage bewegt zu werden. Der Bildschirm kann z.B. an einer Achse drehbar gelagert sein, um den Bildschirm zwischen der Betrachtungslage und der Spiegelungslage zu bewegen. Die Achse kann (zumindest teilweise) quer zu der Fahrtrichtung und/oder quer zu der Längsachse des Fahrzeugs verlaufen.

Der Bildschirm weist eine Bildschirmfläche auf. Dabei kann die Bildschirmfläche eine Vielzahl von Bildpunkten bzw. Pixeln aufweisen, wobei die Bildpunkte bzw. Pixel z.B. in einer Matrix von Bildpunkten angeordnet sind. Beispielsweise kann die Bildschirmfläche N Zeilen und M Spalten mit Bildpunkten aufweisen. Dabei können N und M jeweils 100 oder mehr, 500 oder mehr, 1000 oder mehr, bzw. 2000 oder mehr sein. Die einzelnen Bildpunkte können individuell angesteuert werden, um Licht zu emittieren, und um auf der Bildschirmfläche ein Bild wiederzugeben, das von einem Nutzer des Fahrzeugs betrachtet werden kann. Der Bildschirm ist derart angeordnet, dass die Bildschirmfläche in der Betrachtungslage von einem Nutzer des Fahrzeugs ausgehend von einer Nutzerposition (z.B. ausgehend von der Fahrerposition) des Fahrzeugs direkt betrachtet werden kann. Somit kann der Bildschirm in der Betrachtungslage zur direkten Wiedergabe bzw. Anzeige von Bildinformation genutzt werden. Dabei kann die Bildschirmfläche ggf. berührungsempfindlich sein, so dass die Bildschirmfläche von dem Nutzer für Nutzereingaben berührt werden kann, wenn sich der Bildschirm in der Betrachtungslage befindet.

Das Fahrzeug weist eine spiegelnde Fläche auf. Die spiegelnde Fläche kann Teil des Armaturenbretts und/oder der Instrumententafel des Fahrzeugs sein. Die spiegelnde Fläche kann ein oder mehreren Nutzerposition des Fahrzeugs zugewandt sein.

Der Bildschirm ist derart ausgebildet, dass die Bildschirmfläche in der Spiegelungslage der spiegelnden Fläche zugewandt ist, so dass ein auf der Bildschirmfläche angezeigtes Bild ein Spiegelbild auf der spiegelnden Fläche erzeugt, das für einen Nutzer des Fahrzeugs ausgehend von der Nutzerposition des Fahrzeugs sichtbar ist. Somit kann der Bildschirm in der Spiegelungslage als Projektor verwendet werden, um ein Spiegelbild zur Wiedergabe von bildlicher Information zu erzeugen. Es wird somit eine effiziente Nutzung eines einzigen Bildschirms für mehrere Anwendungsfälle ermöglicht.

Wie bereits oben dargelegt, ist die Bildschirmfläche des Bildschirms in der Betrachtungslage der Nutzerposition des Fahrzeugs zugewandt. Andererseits kann die Bildschirmfläche in der Spiegelungslage von der Nutzerposition abgewandt sein, oder zumindest nicht mehr der Nutzerposition zugewandt sein. Insbesondere kann der Bildschirm in der Spiegelungslage derart angeordnet sein, dass die Bildschirmfläche nicht direkt von der Nutzerposition des Fahrzeugs aus betrachtet bzw. gesehen werden kann. So kann gewährleistet werden, dass der Nutzer immer nur ein Bild sehen kann (entweder direkt auf der Bildschirmfläche (wenn sich der Bildschirm in der Betrachtungslage befindet) oder auf der spiegelnden Fläche (wenn sich der Bildschirm in der Spiegelungslage befindet)).

Die spiegelnde Fläche kann derart relativ zu der Bildschirmfläche angeordnet sein und/oder kann derart geformt sein, dass das Spiegelbild größer als die Bildschirmfläche ist, insbesondere um einen Faktor 1.5 oder mehr, 2 oder mehr, bzw. 3 oder mehr. Alternativ oder ergänzend können der Bildschirm und die spiegelnde Fläche ausgebildet sein, ein um einen Faktor q gegenüber der Bildschirmfläche vergrößertes Spiegelbild zu erzeugen, das eine verzerrungsfreie Wiedergabe von Bildinformation ermöglicht. Dabei ist der Faktor q bevorzugt 1.5 oder mehr, 2 oder mehr, bzw. 3 oder mehr. Es kann somit eine vergrößerte Wiedergabe von Bildinformation über das projizierte Spiegelbild ermöglicht werden. Dies kann z.B. vorteilhaft für die Wiedergabe von Filmen verwendet werden (z.B. bei einer autonomen Fahrt des Fahrzeugs).

Das Fahrzeug kann eine Steuereinheit umfassen, die eingerichtet ist, zu bestimmen, ob sich der Bildschirm in der Betrachtungslage oder in der Spiegelungslage befindet. Die bildliche Wiedergabe auf der Bildschirmfläche des Bildschirms kann dann in Abhängigkeit davon erfolgen, ob sich der Bildschirm in der Betrachtungslage oder in der Spiegelungslage befindet. Insbesondere kann eine Korrektur der bildlichen Wiedergabe auf der Bildschirmfläche erfolgen, wenn sich der Bildschirm in der Spiegelungslage befindet, z.B. um in effizienter Weise eine verzerrungsfreie bildliche Wiedergabe des Spiegelbildes auf der spiegelnden Fläche zu ermöglichen.

Die Steuereinheit ist erfindungsgemäß eingerichtet, ein auf der Bildschirmfläche darzustellendes Bild in Abhängigkeit von Verzerrungsdaten zu verändern, so dass das Bild auf der spiegelnden Fläche für einen Nutzer als verzerrungsfreies Spiegelbild sichtbar wird (insbesondere, wenn bestimmt wird, dass sich der Bildschirm in der Spiegelungslage befindet). Dabei können die Verzerrungsdaten von der Form der spiegelnden Fläche und/oder von der Ausrichtung der spiegelnden Fläche relativ zu der Bildschirmfläche abhängig sein. Es kann somit in effizienter Weise durch Bildverarbeitung eine verzerrungsfreie bildliche Wiedergabe des Spiegelbildes ermöglicht werden.

Die spiegelnde Fläche kann verformbar sein. Insbesondere kann die spiegelnde Fläche eine erste Form aufweisen, wenn sich der Bildschirm in der Betrachtungslage befindet, und eine zweite Form aufweisen, wenn sich der Bildschirm in der Spiegelungslage befindet, wobei die erste Form und die zweite Form unterschiedlich sind. Die erste Form kann z.B. für den (manuellen) Fahrbetrieb des Fahrzeugs optimiert sein (z.B. um eine für den Fahrbetrieb des Fahrzeugs angepasste Benutzerschnittstelle bereitzustellen). Andererseits kann die zweite Form für die Wiedergabe des Spiegelbildes optimiert sein (z.B. um ein möglichst großes Spiegelbild bereitzustellen). So kann der Komfort für einen Nutzer des Fahrzeugs weiter erhöht werden.

Das Fahrzeug kann ausgebildet sein, die spiegelnde Fläche (automatisch) zu verformen, während der Bildschirm von der Betrachtungslage in die Spiegelungslage und/oder von der Spiegelungslage in die Betrachtungslage bewegt wird. So können die unterschiedlichen Anwendungen des Bildschirms in komfortabler Weise bereitgestellt werden.

Das Fahrzeug kann einen elektrisch betriebenen Aktuator (z.B. einen elektrischen Motor) umfassen, der eingerichtet ist, den Bildschirm von der Betrachtungslage in die Spiegelungslage und/oder von der Spiegelungslage in die Betrachtungslage zu bewegen. Der Aktuator kann z.B. in Reaktion auf eine Nutzereingabe aktiviert werden. Durch die Verwendung eines elektrisch betriebenen Aktuators können die unterschiedlichen Anwendungen des Bildschirms in komfortabler Weise bereitgestellt werden.

Wie bereits oben dargelegt, kann der Bildschirm eine berührungsempfindliche Bildschirmfläche (z.B. ein Touchscreen) aufweisen. Das Fahrzeug kann eingerichtet sein, Nutzereingaben zur Steuerung einer Funktion des Fahrzeugs nur dann durch Berührung der Bildschirmfläche zu erfassen, wenn sich der Bildschirm in der Betrachtungslage befindet. Alternativ oder ergänzend kann das Fahrzeug eingerichtet sein, Nutzereingaben zur Steuerung einer Funktion des Fahrzeugs durch Berührung der Bildschirmfläche zu ignorieren, wenn sich der Bildschirm in der Spiegelungslage befindet. So kann die Zuverlässigkeit einer über den Bildschirm bereitgestellten Benutzerschnittstelle des Fahrzeugs erhöht werden.

Der Bildschirm kann derart im Fahrzeug angeordnet sein, dass die Bildschirmfläche des Bildschirms während einer manuellen Fahrt des Fahrzeugs von einem Fahrer des Fahrzeugs betrachtet und/oder berührt werden kann, wenn sich der Bildschirm in der Betrachtungslage befindet. Alternativ oder ergänzend kann die spiegelnde Fläche derart angeordnet und/oder ausgebildet sein, dass das Spiegelbild von mehreren Nutzerpositionen des Fahrzeugs aus gesehen werden kann, wenn sich der Bildschirm in der Spiegelungslage befindet. Somit können in komfortabler Weise in einem Fahrzeug unterschiedliche Anwendungen durch einen einzigen Bildschirm bereitgestellt werden.

Es ist zu beachten, dass die in diesem Dokument beschriebenen Vorrichtungen und Systeme sowohl alleine, als auch in Kombination mit anderen in diesem Dokument beschriebenen Vorrichtungen und Systemen verwendet werden können. Des Weiteren können jegliche Aspekte der in diesem Dokument beschriebenen Vorrichtungen und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1 den Innenraum eines beispielhaften Fahrzeugs; und
Figuren 2a bis 2c einen beispielhaften Bildschirm für ein Fahrzeug.

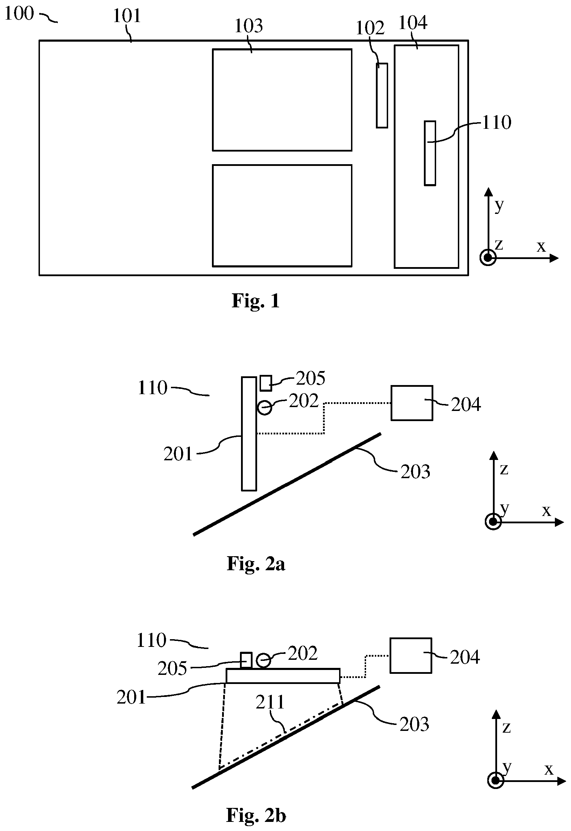

Wie eingangs dargelegt, befasst sich das vorliegende Dokument mit der Bereitstellung eines kompakten Bildschirms in einem Fahrzeug, der für unterschiedliche Anwendungen genutzt werden kann. In diesem Zusammenhang zeigt Fig. 1 beispielhafte Komponenten eines Fahrzeugs 100. Das Fahrzeug 100 umfasst z.B. in einem Innenraum bzw. in einer Insassenkabine 101 ein oder mehrere Insassen- bzw. Nutzerpositionen 103 (z.B. in Form von Sitzen). Des Weiteren kann das Fahrzeug 100 im Frontbereich des Innenraums 101 ein Armaturenbrett 104 und eine Lenkvorrichtung 102 (etwa ein Lenkrad) aufweisen.

Ein Fahrer des Fahrzeugs 100 kann an der Insassenposition 103 angeordnet sein und über die Lenkvorrichtung 102 das Fahrzeug 100 zumindest teilweise manuell steuern.

Ferner weist das Fahrzeug 100 einen Bildschirm 110 auf, der z.B. an dem Armaturenbrett 104 des Fahrzeugs 100 angeordnet ist. Der Bildschirm 110 kann fest in dem Fahrzeug 100 verbaut sein, und kann z.B. als Teil einer Benutzerschnittstelle und/oder eines Navigationssystems des Fahrzeugs 100 genutzt werden. Dabei ist der Bildschirm aus Kosten- und Designgründen meist relativ klein, und daher typischerweise nicht dazu geeignet, einen Film wiederzugeben, der von unterschiedlichen Insassenpositionen 103 des Fahrzeugs 100 aus betrachtet werden kann.

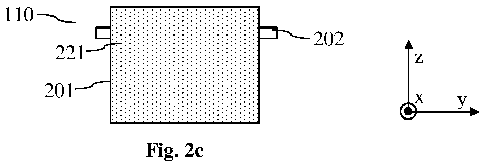

Figuren 2a bis 2c zeigen einen beispielhaften Bildschirm 110 für ein Fahrzeug 100, der für unterschiedliche Anwendungen in unterschiedliche Lagen bzw. Stellungen gebracht werden kann. Der Bildschirm 110 ist um eine Achse 202 dreh- bzw. schwenkbar gelagert, so dass der Bildschirm 110 zwischen einer Betrachtungslage (siehe Fig. 2a) und einer Spiegelungslage (siehe Fig. 2b) hin- und herbewegt werden kann. Wie durch die Koordinatensysteme in den Figuren 1 und 2a bis 2c dargestellt, kann die Achse 202 entlang der y-Achse bzw. entlang der Querachse des Fahrzeugs 100 verlaufen. Die z-Achse entspricht typischerweise der Hochachse des Fahrzeugs 100 und die x-Achse entspricht typischerweise der Längsachse des Fahrzeugs 100.

In der Betrachtungslage ist der Bildschirm 110 derart im Fahrzeug 100 angeordnet, dass die Bildschirmfläche 201 des Bildschirms 110 von einem Nutzer des Fahrzeugs 100 ausgehend von einer Insassenposition 103 des Fahrzeugs 100 direkt betrachtet werden kann. Die Bildschirmfläche 201 kann z.B. im Wesentlichen senkrecht zu der x-Achse des Fahrzeugs 100 verlaufen, wenn sich der Bildschirm 110 in der Betrachtungslage befindet. Insbesondere können die auf der Bildschirmfläche 201 dargestellten Bildpunkte 221 in der Betrachtungslage direkt von dem Nutzer gesehen werden. Des Weiteren kann in der Betrachtungslage bei Verwendung eines berührungsempfindlichen Bildschirms 110 eine Berührung der Bildschirmfläche 201 durch einen an einer Insassenposition 103 des Fahrzeugs 100 angeordneten Nutzer ermöglicht werden.

In der Spiegelungslage ist die Bildschirmfläche 201 des Bildschirms 110 für einen Nutzer des Fahrzeugs 100 typischerweise nicht sichtbar. Die Bildschirmfläche 201 ist in der Spiegelungslage einer spiegelnden Fläche 203 des Fahrzeugs 100 zugewandt, so dass ein auf der Bildschirmfläche 201 dargestelltes Bild auf der spiegelnden Fläche 203 reflektiert wird, und als Spiegelbild 211 für einen an einer Insassenposition 103 des Fahrzeugs 100 angeordneten Nutzer des Fahrzeugs 100 sichtbar wird. Die spiegelnde Fläche 203 kann z.B. Teil des Armaturenbretts 104 des Fahrzeugs 100 sein. In der Spiegelungslage kann die Bildschirmfläche 201 des Bildschirms 110 im Wesentlichen senkrecht zu der z-Achse des Fahrzeugs 100 angeordnet sein.

Die spiegelnde Fläche 203 kann derart ausgebildet und/oder angeordnet sein, dass das Spiegelbild 211 eine vergrößerte Version eines auf der Bildschirmfläche 201 des Bildschirms 110 dargestellten Bildes ist. Insbesondere kann die spiegelnde Fläche 203 zu diesem Zweck schräg in Bezug auf die Bildschirmfläche 201 des Bildschirms 110 angeordnet sein. Alternativ oder ergänzend kann die spiegelnde Fläche 203 eine vergrößernde Krümmung aufweisen.

Es wird somit ein im Raum bewegliches und/oder um eine Querachse 202 drehbar gelagertes Display 110 beschrieben. In einer ersten Stellung (d.h. in der Betrachtungslage) kann eine Anzeige von Information auf der Bildschirmfläche 201 des Displays 110 erfolgen, die direkt von einem Nutzer gesehen werden kann. Die Größe der für den Nutzer sichtbaren Anzeige entspricht dabei der Größe der Bildschirmfläche 201. In der ersten Stellung kann auch eine Touch-Bedienung über eine berührungsempfindliche Bildschirmfläche 201 ermöglicht werden.

Des Weiteren kann das Display 110 in eine zweite Stellung (d.h. in die Spiegelungslage) bewegt werden, so dass sich ein auf der Bildschirmfläche 201 dargestelltes Bild an einer spiegelnden Fläche 203 spiegelt. Dadurch wird ein um einen bestimmten Faktor q vergrößertes Spiegelbild 211 erzeugt, wobei der Faktor q von der Ausrichtung und/oder der Krümmung der spiegelnden Fläche 203 abhängt. Die zweite Stellung kann z.B. dazu genutzt werden, einen Film wiederzugeben, der von mehreren Insassenpositionen 103 des Fahrzeugs 100 aus betrachtet werden kann. In der zweiten Stellung können Nutzereingaben z.B. über Remote Touch, Sprache und/oder Gesten ermöglicht werden.

Die spiegelnde Fläche 203 des Fahrzeugs 100 kann flexibel und/oder biegsam ausgebildet sein. Insbesondere kann die spiegelnde Fläche 203 durch einen Mechanismus verformt werden, wenn der Bildschirm 110 von der Betrachtungslage in die Spiegelungslage bewegt wird. Mit anderen Worten, die spiegelnde Fläche 203 (z.B. als Teil der Instrumententafel bzw. des Armaturenbretts 104 des Fahrzeugs 100) kann derart gestaltet sein, dass sich die spiegelnde Fläche 203 bei Drehung des Monitors bzw. Bildschirms 110 flexibel und/oder spaltenfrei biegt, um die Drehung des Monitors 110 zu ermöglichen. Mit noch anderen Worten, die spiegelnde Fläche 203 kann in der Betrachtungslage eine andere Form aufweisen als in der Spiegelungslage. Insbesondere kann die Form der spiegelnden Fläche 203 in der Betrachtungslage für den Fahrbetrieb des Fahrzeugs 100 optimiert sein. Andererseits kann die Form der spiegelnden Fläche 203 in der Spiegelungslage für die Darstellung eines vergrößerten und verzerrungsfreien Spiegelbildes 211 optimiert sein. So kann die Bereitstellung eines verstellbaren Bildschirms 110 weiter verbessert werden.

Das Fahrzeug 100 kann einen Aktuator 205, z.B. einen elektrischen Motor, aufweisen, der eingerichtet ist, den Bildschirm 110 automatisch zwischen der Betrachtungslage und der Spiegelungslage hin und her zu bewegen. Des Weiteren kann das Fahrzeug 100 zumindest ein Bedienelement (nicht dargestellt) umfassen, das von einem Nutzer des Fahrzeugs 100 betätigt werden kann, um zu veranlassen, dass der Bildschirm 110 von der Betrachtungslage in die Spiegelungslage und/oder von der Spiegelungslage in die Betrachtungslage bewegt wird. So kann der Komfort für einen Nutzer des Fahrzeugs 100 weiter erhöht werden.

Des Weiteren kann das Fahrzeug 100 eine Steuereinheit 204 umfassen, die eingerichtet ist, zu bestimmen, ob sich der Bildschirm 110 in der Betrachtungslage oder in der Spiegelungslage befindet. Der Bildschirm 110 kann in Abhängigkeit davon betrieben werden, ob sich der Bildschirm 110 in der Betrachtungslage oder in der Spiegelungslage befindet. Beispielsweise können Benutzereingabe über die berührungsempfindliche Bildschirmfläche 201 ggf. nur dann ermöglicht werden, wenn sich der Bildschirm 110 in der Betrachtungslage befindet. Andererseits können Berührungen der Bildschirmfläche 201 ignoriert werden, wenn sich der Bildschirm 110 in der Spiegelungslage befindet. So kann die Zuverlässigkeit einer über den Bildschirm 110 bereitgestellten Benutzerschnittstelle des Fahrzeugs 100 erhöht werden.

Alternativ oder ergänzend können die auf der Bildschirmfläche 201 dargestellten Bilder in Abhängigkeit davon ausgegeben werden, ob sich der Bildschirm 110 in der Betrachtungslage oder in der Spiegelungslage befindet. Insbesondere kann ein Bild ggf. in verzerrter Weise auf der Bildschirmfläche 201 ausgegeben werden, wenn sich der Bildschirm 110 in der Spiegelungslage befindet, um Verzerrungen, die durch die Ausrichtung und/oder die Form der spiegelnden Fläche 203 bewirkt werden, zumindest teilweise zu kompensieren. Beispielsweise können durch die Steuereinheit 204 Verzerrungsdaten berücksichtigt werden, die von der Ausrichtung und/oder der Form der spiegelnden Fläche 203 abhängig sind. Die Verzerrungsdaten können eine Transformation zwischen einem Bild, das auf der Bildschirmfläche 201 angezeigt wird, und dem Spiegelbild 211 anzeigen. Die Steuereinheit 204 kann dann die dazu inverse Transformation auf ein auf der Bildschirmfläche 201 darzustellendes Bild anwenden, um zu bewirken, dass das Spiegelbild 211 das darzustellende Bild verzerrungsfrei wiedergibt. Durch die Berücksichtigung von Verzerrungsdaten kann somit in effizienter Weise die Wiedergabe von verzerrungsfreien Spiegelbildern 211 auf einer spiegelnden Fläche 203 ermöglicht werden.

Es wird somit ein verstellbarer Bildschirm 110 beschrieben, der in einer Betrachtungslage die Bereitstellung einer Benutzerschnittstelle mit hoher Auflösung für den manuellen Fahrbetrieb ermöglicht. Des Weiteren kann der Bildschirm 110 in einer Spiegelungslage als relativ großer virtueller Monitor verwendet werden (z.B., wenn sich das Fahrzeug 100 in einem autonomen Fahrmodus befindet). So kann in effizienter Weise der Komfort für einen Nutzer eines Fahrzeugs 100 erhöht werden.

## Patentansprüche

1. Fahrzeug (100) mit einem Bildschirm (110), wobei
- der Bildschirm (110) ausgebildet ist, zwischen einer Betrachtungslage und einer Spiegelungslage bewegt zu werden;
- der Bildschirm (110) eine Bildschirmfläche (201) aufweist;
- die Bildschirmfläche (201) in der Betrachtungslage von einem Nutzer des Fahrzeugs (100) ausgehend von einer Nutzerposition (103) des Fahrzeugs (100) direkt betrachtet werden kann;
- das Fahrzeug (100) eine spiegelnde Fläche (203) aufweist;
- die Bildschirmfläche (201) in der Spiegelungslage der spiegelnden Fläche (203) zugewandt ist, so dass ein auf der Bildschirmfläche (201) angezeigtes Bild ein Spiegelbild (211) auf der spiegelnden Fläche (203) erzeugt, das für einen Nutzer des Fahrzeugs (100) ausgehend von der Nutzerposition (103) des Fahrzeugs (100) sichtbar ist; und
- das Fahrzeug (100) eine Steuereinheit (204) umfasst, die eingerichtet ist,
- zu bestimmen, ob sich der Bildschirm (110) in der Betrachtungslage oder in der Spiegelungslage befindet, **dadurch gekennzeichnet, dass**
- wenn bestimmt wird, dass sich der Bildschirm (110) in der Spiegelungslage befindet, ein auf der Bildschirmfläche (201) darzustellendes Bild in Abhängigkeit von Verzerrungsdaten zu verändern, so dass das Bild auf der spiegelnden Fläche (203) für einen Nutzer als verzerrungsfreies Spiegelbild (211) sichtbar wird; wobei die Verzerrungsdaten von einer Form der spiegelnden Fläche (203) und/oder von einer Ausrichtung der spiegelnden Fläche (203) relativ zu der Bildschirmfläche (201) abhängig sind.

2. Fahrzeug (100) gemäß Anspruch 1, wobei die spiegelnde Fläche (203) derart relativ zu der Bildschirmfläche (201) angeordnet ist und/oder derart geformt ist, dass das Spiegelbild (203) größer als die Bildschirmfläche (201) ist, insbesondere um einen Faktor 1.5 oder mehr, 2 oder mehr, bzw. 3 oder mehr.

3. Fahrzeug (100) gemäß einem der vorhergehenden Ansprüche, wobei
- der Bildschirm (110) und die spiegelnde Fläche (203) ausgebildet sind, ein um einen Faktor q gegenüber der Bildschirmfläche (201) vergrößertes Spiegelbild (211) zu erzeugen, das eine verzerrungsfreie Wiedergabe von Bildinformation ermöglicht; und
- der Faktor q insbesondere 1.5 oder mehr, 2 oder mehr, bzw. 3 oder mehr ist.

4. Fahrzeug (100) gemäß einem der vorhergehenden Ansprüche, wobei die spiegelnde Fläche (203) Teil eines Armaturenbretts (103) und/oder einer Instrumententafel des Fahrzeugs (100) ist.

5. Fahrzeug (100) gemäß einem der vorhergehenden Ansprüche, wobei der Bildschirm (110) an einer Achse (202) drehbar gelagert ist, um den Bildschirm (110) zwischen der Betrachtungslage und der Spiegelungslage zu bewegen.

6. Fahrzeug (100) gemäß Anspruch 5, wobei die Achse (202) quer zu einer Fahrtrichtung und/oder zu einer Längsachse des Fahrzeugs (100) verläuft.

7. Fahrzeug (100) gemäß einem der vorhergehenden Ansprüche, wobei
- die spiegelnde Fläche (203) verformbar ist;
- die spiegelnde Fläche (203) eine erste Form aufweist, wenn sich der Bildschirm (110) in der Betrachtungslage befindet, und eine zweite Form aufweist, wenn sich der Bildschirm (110) in der Spiegelungslage befindet; und
- die erste Form und die zweite Form unterschiedlich sind.

8. Fahrzeug (100) gemäß Anspruch 7, wobei das Fahrzeug (100) ausgebildet ist, die spiegelnde Fläche (203) zu verformen, während der Bildschirm (110) von der Betrachtungslage in die Spiegelungslage und/oder von der Spiegelungslage in die Betrachtungslage bewegt wird.

9. Fahrzeug (100) gemäß einem der vorhergehenden Ansprüche, wobei das Fahrzeug (100) einen elektrisch betriebenen Aktuator (205) umfasst, der eingerichtet ist, den Bildschirm (110) von der Betrachtungslage in die Spiegelungslage und/oder von der Spiegelungslage in die Betrachtungslage zu bewegen.

10. Fahrzeug (100) gemäß einem der vorhergehenden Ansprüche, wobei
- der Bildschirm (110) eine berührungsempfindliche Bildschirmfläche (201) aufweist;
- das Fahrzeug (100) eingerichtet ist, Nutzereingaben zur Steuerung einer Funktion des Fahrzeugs (100) nur dann durch Berührung der Bildschirmfläche (201) zu erfassen, wenn sich der Bildschirm (110) in der Betrachtungslage befindet, und/oder
- das Fahrzeug (100) eingerichtet ist, Nutzereingaben zur Steuerung einer Funktion des Fahrzeugs (100) durch Berührung der Bildschirmfläche (201) zu ignorieren, wenn sich der Bildschirm (110) in der Spiegelungslage befindet.

11. Fahrzeug (100) gemäß einem der vorhergehenden Ansprüche, wobei
- der Bildschirm (110) derart angeordnet ist, dass die Bildschirmfläche (201) des Bildschirms (110) während einer manuellen Fahrt des Fahrzeugs (100) von einem Fahrer des Fahrzeugs (100) betrachtet und/oder berührt werden kann, wenn sich der Bildschirm (110) in der Betrachtungslage befindet, und/oder
- die spiegelnde Fläche (203) derart angeordnet und/oder ausgebildet ist, dass das Spiegelbild (211) von mehreren Nutzerpositionen (103) des Fahrzeugs (100) aus gesehen werden kann, wenn sich der Bildschirm (110) in der Spiegelungslage befindet.

## Claims

1. Vehicle (100) having a display screen (110), wherein
- the display screen (110) is designed to be moved between an observation position and a reflection position;
- the display screen (110) has a display screen surface (201);
- the display screen surface (201) can be observed directly by a user of the vehicle (100) from a user position (103) of the vehicle (100) in the observation position;
- the vehicle (100) has a reflective surface (203);
- the display screen surface (201) faces toward the reflective surface (203) in the reflection position, so that an image displayed on the display screen surface (201) generates a mirror image (211) on the reflective surface (203), which is visible to a user of the vehicle (100) from the user position (103) of the vehicle (100); and
- the vehicle (100) comprises a control unit (204), which is configured
- to determine whether the display screen (110) is in the observation position or in the reflection position;
**characterized in that**
- if it is determined that the display screen (110) is in the reflection position, to change an image to be displayed on the display screen surface (201) as a function of distortion data so that the image on the reflective surface (203) is visible to a user as a distortion-free mirror image (211) ; wherein the distortion data are dependent on a shape of the reflective surface (203) and/or on an orientation of the reflective surface (203) relative to the display screen surface (201).

2. Vehicle (100) according to Claim 1, wherein the reflective surface (203) is arranged in relation to the display screen surface (201) and/or is shaped in such a way that the mirror image (203) is larger than the display screen surface (201), in particular by a factor of 1.5 or more, 2 or more, or 3 or more.

3. Vehicle (100) according to any of the preceding claims, wherein
- the display screen (110) and the reflective surface (203) are designed to generate a mirror image (211) enlarged by a factor q in relation to the display screen surface (201), which enables a distortion-free reproduction of image information; and
- the factor q is in particular 1.5 or more, 2 or more, or 3 or more.

4. Vehicle (100) according to any of the preceding claims, wherein the reflective surface (203) is part of a dashboard (103) and/or an instrument panel of the vehicle (100).

5. Vehicle (100) according to any of the preceding claims, wherein the display screen (110) is rotatably mounted on an axis (202) in order to move the display screen (110) between the observation position and the reflection position.

6. Vehicle (100) according to Claim 5, wherein the axis (202) extends transversely to a travel direction and/or to a longitudinal axis of the vehicle (100).

7. Vehicle (100) according to any of the preceding claims, wherein
- the reflective surface (203) is deformable;
- the reflective surface (203) has a first shape when the display screen (110) is in the observation position, and has a second shape when the display screen (110) is in the reflection position; and
- the first shape and the second shape are different.

8. Vehicle (100) according to Claim 7, wherein the vehicle (100) is designed to deform the reflective surface (203) while the display screen (110) is moved from the observation position into the reflection position and/or from the reflection position into the observation position.

9. Vehicle (100) according to any of the preceding claims, wherein the vehicle (100) comprises an electrically operated actuator (205), which is configured to move the display screen (110) from the observation position into the reflection position and/or from the reflection position into the observation position.

10. Vehicle (100) according to any of the preceding claims, wherein
- the display screen (110) has a touch-sensitive display screen surface (201);
- the vehicle (100) is configured to detect user inputs to control a function of the vehicle (100) by touching the display screen surface (201) only when the display screen (110) is in the observation position; and/or
- the vehicle (100) is configured to ignore user inputs to control a function of the vehicle (100) by touching the display screen surface (201) when the display screen (110) is in the reflection position.

11. Vehicle (100) according to any of the preceding claims, wherein
- the display screen (110) is arranged in such a way that the display screen surface (201) of the display screen (110) can be observed and/or touched by a driver of the vehicle (100) during manual driving of the vehicle (100) when the display screen (110) is in the observation position; and/or
- the reflective surface (203) is arranged and/or designed in such a way that the mirror image (211) can be seen from multiple user positions (103) of the vehicle (100) when the display screen (110) is in the reflection position.

## Revendications

1. Véhicule (100) équipé d'un écran (110), dans lequel
- l'écran (110) est réalisé de manière à être déplacé entre une position d'observation et une position de réflexion ;
- l'écran (110) présente une surface d'écran (201) ;
- la surface d'écran (201) peut être observée directement dans la position d'observation par un utilisateur du véhicule (100) à partir d'une position d'utilisateur (103) du véhicule (100) ;
- le véhicule (100) présente une surface réfléchissante (203) ;
- la surface d'écran (201), dans la position de réflexion, est orientée vers la surface réfléchissante (203) de telle sorte qu'une image affichée sur la surface d'écran (201) génère sur la surface réfléchissante (203) une image réfléchie (211) qui est visible pour un utilisateur du véhicule (100) à partir de la position d'utilisateur (103) du véhicule (100) ; et
- le véhicule (100) comprend une unité de commande (204) qui est conçue
- pour déterminer si l'écran (110) se trouve dans la position d'observation ou dans la position de réflexion ; **caractérisé en ce que**
- lorsqu'il est déterminé que l'écran (110) se trouve dans la position de réflexion, une image devant être représentée sur la surface d'écran (201) est modifiée en fonction de données de distorsion de telle sorte que l'image soit visible pour un utilisateur sur la surface réfléchissante (203) sous la forme d'une image réfléchie sans distorsion (211) ; dans lequel les données de distorsion dépendent d'une forme de la surface réfléchissante (203) et/ou d'une orientation de la surface réfléchissante (203) par rapport à la surface d'écran (201).

2. Véhicule (100) selon la revendication 1, dans lequel la surface réfléchissante (203) est agencée par rapport à la surface d'écran (201) et/ou est formée de telle sorte que l'image réfléchie (203) soit respectivement plus grande que la surface d'écran (201), en particulier d'un facteur 1,5 ou plus, de 2 ou plus, ou de 3 ou plus.

3. Véhicule (100) selon l'une quelconque des revendications précédentes, dans lequel
- l'écran (110) et la surface réfléchissante (203) sont réalisés de manière à générer une image réfléchie (211) agrandie d'un facteur q par rapport à la surface d'écran (201), qui permet une reproduction sans distorsion d'informations d'image ; et
- le facteur q est en particulier de 1,5 ou plus, de 2 ou plus, ou de 3 ou plus.

4. Véhicule (100) selon l'une quelconque des revendications précédentes, dans lequel la surface réfléchissante (203) fait partie d'une planche de bord (103) et/ou d'un tableau de bord du véhicule (100).

5. Véhicule (100) selon l'une quelconque des revendications précédentes, dans lequel l'écran (110) est monté pivotant sur un axe (202) pour déplacer l'écran (110) entre la position d'observation et la position de réflexion.

6. Véhicule (100) selon la revendication 5, dans lequel l'axe (202) s'étend transversalement à une direction de déplacement et/ou à un axe longitudinal du véhicule (100) .

7. Véhicule (100) selon l'une quelconque des revendications précédentes, dans lequel
- la surface réfléchissante (203) est déformable ;
- la surface réfléchissante (203) présente une première forme lorsque l'écran (110) est dans la position d'observation, et présente une deuxième forme lorsque l'écran (110) est dans la position de réflexion ; et
- la première forme et la deuxième forme sont différentes.

8. Véhicule (100) selon la revendication 7, dans lequel le véhicule (100) est réalisé de manière à déformer la surface réfléchissante (203) pendant que l'écran (110) est déplacé de la position d'observation à la position de réflexion et/ou de la position de réflexion à la position d'observation.

9. Véhicule (100) selon l'une quelconque des revendications précédentes, dans lequel le véhicule (100) comprend un actionneur (205) à commande électrique qui est conçu pour déplacer l'écran (110) de la position d'observation à la position de réflexion et/ou de la position de réflexion à la position d'observation.

10. Véhicule (100) selon l'une quelconque des revendications précédentes, dans lequel
- l'écran (110) présente une surface d'écran tactile (201) ;
- le véhicule (100) est conçu pour détecter des entrées d'utilisateur destinées à commander une fonction du véhicule (100) en touchant la surface d'écran (201) uniquement lorsque l'écran (110) se trouve dans la position d'observation ; et/ou
- le véhicule (100) est conçu pour ignorer des entrées d'utilisateur destinées à commander une fonction du véhicule (100) en touchant la surface d'écran (201) lorsque l'écran (110) se trouve dans la position de réflexion.

11. Véhicule (100) selon l'une quelconque des revendications précédentes, dans lequel
- l'écran (110) est agencé de telle sorte que la surface d'écran (201) de l'écran (110) puisse être observée et/ou touchée par un conducteur du véhicule (100) pendant un déplacement manuel du véhicule (100) lorsque l'écran (110) est dans la position d'observation ; et/ou
- la surface réfléchissante (203) est agencée et/ou réalisée de telle sorte que l'image réfléchie (211) puisse être vue à partir de plusieurs positions d'utilisateur (103) du véhicule (100) lorsque l'écran (110) est dans la position de réflexion.
